# EUROPEAN PATENT APPLICATION

(11) **EP 4 791 005 A1**
(43) Date of publication of application: **12.08.2026**
(21) Application number: 24874024.3
(22) Date of filing: 19.08.2024
(51) Int. Cl.: H04N 21/21, H04N 21/222, H04N 21/2187, H04L 45/02, H04L 45/48

(54) **DATA STREAM SCHEDULING METHOD OF AUDIO AND VIDEO NETWORK, STORAGE MEDIUM, AND ELECTRONIC DEVICE**

(30) Priority: 07.10.2023 CN 202311281740
(71) Applicant: ZTE CORPORATION, Shenzhen, Guangdong 518057 (CN)
(72) Inventor: CHEN, Junjiang, Shenzhen, Guangdong 518057 (CN); ZHANG, Weiqing, Shenzhen, Guangdong 518057 (CN); SHEN, Guang, Shenzhen, Guangdong 518057 (CN); GUO, Chengfeng, Shenzhen, Guangdong 518057 (CN); LIU, Zhilong, Shenzhen, Guangdong 518057 (CN)
(74) Representative: Deambrogi, Edgardo
(86) International application number: PCT/CN2024/113175
(87) International publication number: WO 2025/073205

(57) **Abstract**

Embodiments of the present disclosure provide a data stream scheduling method of an audio and video network, a storage medium, and an electronic device. The method comprises: constructing a tree-like path among edge nodes on the basis of network topology data of an audio and video network; on the basis of source nodes, decoupling the tree-like path to corresponding edge nodes; and the edge nodes scheduling a data stream on the basis of the tree-like path.

## Description

### Cross-Reference to Related Application

The present disclosure is based on and claims priority to Chinese patent application CN202311281740.2, filed on October 7, 2023, and titled "Data Stream Scheduling Method of Audio and Video Network, Storage Medium, and Electronic Device", the disclosure of which is incorporated herein by reference in its entirety.

### Technical Field

The present disclosure relates to the field of communications, and in particular, to a data stream scheduling method of an audio and video network, a storage medium, and an electronic device.

### Background

In recent years, with the development of the Real-Time Communication (RTC) industry, boundaries between Real-Time Network (RTN) and Content Delivery Network (CDN) technologies have become increasingly blurred. As a new form of audio and video network, the RTN is required to support the integration of multiple networks and multiple scenarios, continuing to evolve toward larger scale, lower latency, and reduced cost. However, when applied to CDN scenarios and large-scale low-latency live streaming scenarios, current RTN technology faces the following pain points.

First, the cost of mesh distribution is relatively high. Conventional RTN systems are suitable for mesh-path or point-to-point path distribution scenarios. However, in large-scale low-latency live streaming scenarios, such as those implemented via CDN, if every path is established directly from a data source node to each respective target node, the pressure of mesh distribution and the cascading cost increase dramatically, making it almost impossible to meet service requirements.

Second, the control plane faces heavy management and scheduling pressure. Conventional RTN systems perform global management and scheduling on the control plane. However, nodes in CDN scenarios typically contain a significantly larger number of streaming media instances compared to those in RTN nodes, differing by orders of magnitude. If all forwarding instances are uniformly managed and scheduled by the control plane, the pressure on control-plane management and scheduling will be greatly amplified.

Consequently, how to incorporate CDN capabilities and large-scale low-latency live streaming capabilities into the RTN system to lower mesh distribution costs and alleviate control-plane management and scheduling pressures has emerged as an urgent issue requiring immediate resolution.

### Summary

The embodiments of the present disclosure provide a data stream scheduling method of an audio and video network, a storage medium, and an electronic device.

According to one or more embodiments of the present disclosure, provided is a data stream scheduling method of an audio and video network. The data stream scheduling method includes: constructing tree-like paths between edge nodes based on network topology data of the audio and video network; decoupling each tree-like path among the tree-like paths to the edge node corresponding to the tree-like path according to a source node of the tree-like path; and scheduling, by each edge node among the edge nodes, a data stream according to the tree-like path corresponding to the edge node.

According to another embodiment of the present disclosure, provided is a computer-readable storage medium. A computer program is stored in the computer-readable storage medium, wherein the computer program, when executed by a processor, causes the processor to implement operations of the packet scheduling method in any one of the above embodiments.

According to still another embodiment of the present disclosure, provided is an electronic device, including a memory and a processor, wherein a computer program is stored on the memory, and the processor is configured to execute the computer program so as to implement operations of the packet scheduling method in any one of the above embodiments.

### Brief Description of the Drawings

Fig. 1 is a block diagram of the hardware structure of a computer terminal for implementing a data stream scheduling method of an audio and video network according to one or more embodiments of the present disclosure;
Fig. 2 is a schematic diagram of network architecture for operating a data stream scheduling method of an audio and video network according to one or more embodiments of the present disclosure;
Fig. 3 is a flowchart of a data stream scheduling method of an audio and video network according to one or more embodiments of the present disclosure;
Fig. 4 is a structural block diagram of a data stream scheduling apparatus of an audio and video network according to one or more embodiments of the present disclosure;
Fig. 5 is a schematic diagram of network topology and data according to one or more embodiments of the present disclosure;
Fig. 6 is a schematic diagram of an example of dynamically planned node-level tree-like paths according to one or more embodiments of the present disclosure;
Fig. 7 is a schematic diagram of a path protocol according to one or more embodiments of the present disclosure; and
Fig. 8 is a schematic diagram of a principle of load-balanced tree-like distribution according to one or more embodiments of the present disclosure.

### Detailed Description of the Embodiments

The embodiments of the present disclosure will be described in detail below with reference to the accompanying drawings and in conjunction with the embodiments.

It should be noted that the terms "first", "second" and the like in the specification and claims of the present disclosure and the above-mentioned accompanying drawings are used to distinguish similar objects, and are not necessarily used to describe a specific order or sequence.

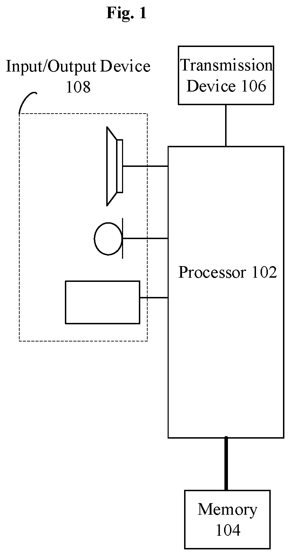

The method embodiments provided in the embodiments of the present disclosure may be executed on a mobile terminal, a computer terminal, or a similar computing device. Taking the operation on a mobile terminal as an example, Fig. 1 is a block diagram of the hardware structure of a computer terminal for implementing a data stream scheduling method of an audio and video network according to one or more embodiments of the present disclosure. As shown in Fig. 1, the mobile terminal may include one or more (only one is shown in Fig. 1) processors 102 (each of the one or more processors 102 may include, but is not limited to, a processing device such as a microprocessor (e.g., a Micro-Controller Unit (MCU)) or a programmable logic device (e.g., a Field Programmable Gate Array (FPGA))) and a memory 104 for storing data. The mobile terminal may further include a transmission device 106 for communication functions and an input/output device 108. Those having ordinary skill in the art can understand that the structure shown in Fig. 1 is merely schematic and does not limit the structure of the aforementioned mobile terminal. For example, the mobile terminal may include more or fewer components than those shown in Fig. 1, or have a different configuration from that shown in Fig. 1.

The memory 104 may be used to store computer programs, such as software programs and modules of application software, e.g., the computer program corresponding to the data stream scheduling method of the audio and video network in the embodiments of the present disclosure. The one or more processors 102 execute various functional applications and data processing by running the computer programs stored in the memory 104, i.e., implementing the aforementioned method. The memory 104 may include a high-speed random access memory, and may also include a non-volatile memory, such as one or more magnetic storage devices, flash memories, or other non-volatile solid-state memories. In some examples, the memory 104 may further include a memory remotely disposed relative to the one or more processors 102, and such remote memories may be connected to the mobile terminal through a network. Examples of the aforementioned network include, but are not limited to, the Internet, an enterprise intranet, a local area network, a mobile communication network, and combinations thereof.

The transmission device 106 is used to receive or send data via a network. Specific examples of the aforementioned network may include a wireless network provided by a communication service provider of the mobile terminal. In an example, the transmission device 106 includes a Network Interface Controller (NIC), which can be connected to other network devices through a base station to communicate with the Internet. In one example, the transmission device 106 may be a Radio Frequency (RF) module, which is used to communicate with the Internet in a wireless manner.

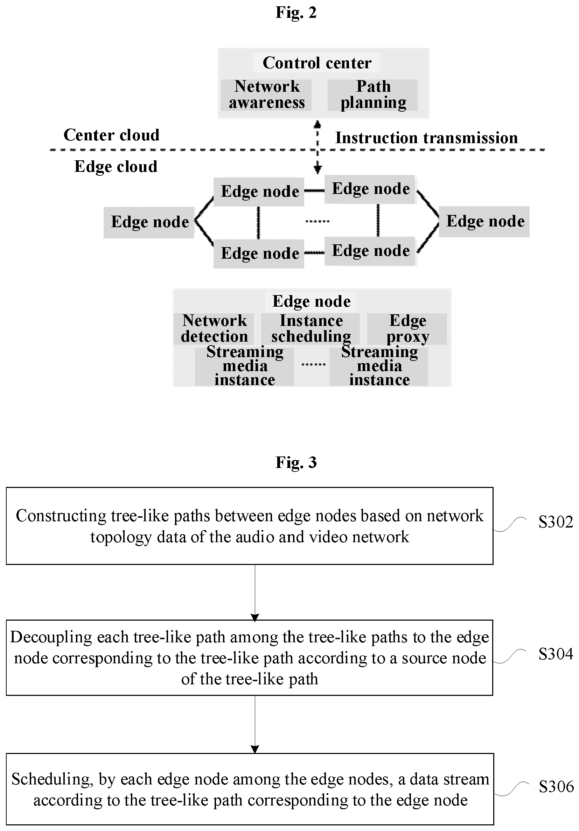

Fig. 2 is a schematic diagram of network architecture for operating a data stream scheduling method of an audio and video network according to one or more embodiments of the present disclosure. The method embodiments of the present disclosure may operate on the network architecture shown in Fig. 2. As shown in Fig. 2, the network architecture includes a control center and edge nodes, wherein the control center is a logical node located in the central cloud of an RTN system, and includes network element modules such as network awareness and path planning. The network awareness (module) is responsible for the management and synchronization of data such as edge nodes, network topology, and network detection. The path planning (module) is responsible for dynamically planning tree-like paths according to real-time network topology and detection data, and decoupling and synchronizing the tree-like paths to edge nodes according to source nodes. Edge nodes are logical nodes located in the edge cloud of the RTN system and include network element modules such as network detection, edge proxy, instance scheduling, and streaming media instances. The network detection (module) is responsible for performing network detection to adjacent nodes according to detection requests issued by the network awareness (module). The edge proxy (module) is responsible for receiving Identity Document (ID) and Internet Protocol (IP) mapping data synchronized by the network awareness (module) and providing a query mechanism, and is also responsible for receiving the tree-like paths synchronized by the path planning (module), maintaining edge paths, and providing a query mechanism. The instance scheduling (module) is responsible for detecting the status of streaming media instances via a keep-alive interface, and providing a load-balanced routing function, and is capable of automatic switching upon detecting an abnormality in a streaming media instance. The streaming media instance (module) is responsible for transmitting service data streams, acquiring transmission paths and mapping relationships via the edge proxy (module), encapsulating a path header, parsing the path header, and performing tree-like distribution according to an optimal path.

In the embodiments of the present disclosure, a data stream scheduling method of an audio and video network, which is applied to the above computer terminal or network architecture, is provided. Fig. 3 is a flowchart of a data stream scheduling method of an audio and video network according to one or more embodiments of the present disclosure. As shown in Fig. 3, the flow includes the following operations S302 to S306.

In operation S302, tree-like paths between edge nodes are constructed based on network topology data of the audio and video network.

In an exemplary embodiment, the operation of constructing the tree-like paths between the edge nodes based on the network topology data of the audio and video network includes: acquiring the network topology data of the audio and video network, and quantifying the network topology data according to network detection data of each edge node; and constructing the tree-like paths between the edge nodes based on the quantified network topology data.

In an exemplary embodiment, the network detection data includes at least one of: a network packet loss rate of each edge node; delay data of each edge node; or bandwidth data of each edge node.

In actual implementation, the network awareness functional module of the control center may initiate a data detection request to the network detection module of each edge node according to real-time network topology, driving each edge node to perform network detection with adjacent nodes, collect data such as network packet loss rates, delays, and bandwidth between nodes, and immediately synchronize the collected data to the path planning (module). The network detection cycle can be set to second-level detection to perceive network changes in real time.

In operation S304, each tree-like path among the tree-like paths is decoupled to the edge node corresponding to the tree-like path according to a source node of the tree-like path.

In an exemplary embodiment, the operation of decoupling each tree-like path among the tree-like paths to the edge node corresponding to the tree-like path according to the source node of the tree-like path includes: decoupling each tree-like path among the tree-like paths to the edge node identical to a root node of the tree-like path in a nested array format.

In actual implementation, after dynamically planning a respective tree-like path with respective node as the source node to reach other nodes, the path planning (module) decouples the tree-like path in real time according to the source node, synchronizes and sinks the tree-like path to the edge proxy module of the edge node identical to the root node of the tree-like path, thereby completing the decoupling of tree-like path data from the center to the edge. The tree-like paths in the decoupling stage according to source nodes can be represented in the form of a nested array: elements of the outer array of the nested array represent one piece of path information, and the whole outer array represents all path information from the source node to other nodes; elements of the inner array of the nested array represent one node information, and the whole inner array represents one piece of path information according to the sequential order of elements.

In an exemplary embodiment, after decoupling each tree-like path among the tree-like paths to the edge node corresponding to the tree-like path according to the source node of the tree-like path, the data stream scheduling method of the audio and video network further includes: storing and maintaining, by each edge node, the tree-like path corresponding to the edge node.

In an exemplary embodiment, storing and maintaining, by each edge node, the tree-like path corresponding to the edge node includes: storing and maintaining, by each edge node, the tree-like path corresponding to the edge node via a target node mapping table.

In actual implementation, considering that CDN and large-scale low-latency live streaming scenarios require distributing data to multiple different target nodes, and also considering that original RTN scenarios require transmitting data to one target node, needing to query tree-like paths of multiple target nodes while also being compatible with querying a single path of a single target node, single paths can be stored and maintained. Moreover, since the source node of the tree-like paths is the local node, different paths can be distinguished by target nodes. Therefore, the tree-like path in the stage where the edge proxy (module) maintains the tree-like path can be represented in the form of a target node mapping table.

In operation S306, each edge node among the edge nodes schedules a data stream according to the tree-like path corresponding to the edge node.

In an exemplary embodiment, the operation of scheduling, by each edge node among the edge nodes, the data stream according to the tree-like path corresponding to the edge node includes: in response to a transmission request from one or more target nodes, acquiring, by a source node among the edge nodes, a corresponding tree-like path, and scheduling, by the source node, the data stream according to the tree-like path.

In an exemplary embodiment, the operation of, in response to the transmission request from the one or more target nodes, acquiring, by the source node among the edge nodes, the corresponding tree-like path includes: in a case where the transmission request originates from one or more edge nodes different from the source node, acquiring, by a streaming media instance of the source node, the corresponding tree-like path according to an Identifier (ID) of the source node and an ID of each of the one or more target nodes.

In an exemplary embodiment, the operation of acquiring, by the streaming media instance of the source node, the corresponding tree-like path according to the ID of the source node and the ID of each of the one or more target nodes includes: in a case where a quantity of the one or more target nodes is equal to 1, acquiring, by the source node, one piece of path information; in a case where the quantity of the one or more target nodes is greater than 1, acquiring, by the source node, multiple pieces of path information, combining, by the source node, the multiple pieces of path information into the tree-like path, and transmitting, by the source node, the tree-like path to each edge node in the multiple pieces of path information in a branch nested array format.

In actual implementation, in the case where the source node and the target node are different nodes, and further distinguishing whether the scenario is a CDN or a large-scale low-latency live streaming scenario to determine whether a single target node or multiple target nodes are acquiring the data stream from the same source node, the rules are as follows. In a case where a single target node acquires the data stream from the source node, the edge proxy (module) directly returns a single piece of path information. In a case where multiple target nodes acquire the data stream from the source node, the edge proxy (module) combines multiple pieces of path information into a tree-like path and then returns the combined tree-like path. The tree-like path in the stage of acquiring the tree-like path can be represented in the form of a branch nested array: the elements of the outer array of the branch nested array represent a branch, and the whole outer array represents all branches of the tree-like path; the elements of the inner array of the branch nested array represent a node, and the whole inner array indicates that the node represented by the first element will distribute data to the nodes represented by the subsequent elements, i.e., a branch.

In an exemplary embodiment, after acquiring, by the source node among the edge nodes, the corresponding tree-like path in response to the transmission request from the one or more target nodes, the data stream scheduling method of the audio and video network further includes: encapsulating, by the source node, the tree-like path in a path header of a media packet protocol stack.

In an exemplary embodiment, the operation of scheduling, by the source node, the data stream according to the tree-like path includes: parsing, by the source node, the path header to acquire path information containing an Internet Protocol (IP) address of each of one or more next-hop nodes; replicating, by the source node, a data packet to be transmitted based on a quantity of the one or more next-hop nodes so as to obtain one or more replicated data packets, and transmitting, by the source node, the one or more replicated data packets to the one or more next-hop nodes; determining, by each next-hop node among the one or more next-hop nodes, whether the next-hop node is a target node, in a case where the next-hop node is a target node, terminating scheduling of the data stream, and in a case where the next-hop node is not a target node, continuing scheduling the data stream according to the path information parsed from the path header.

In actual implementation, when scheduling the data stream, service data distribution to streaming media instances can be performed by combining actual service conditions and streaming media instance conditions, and a load balancing method can be adopted for service distribution to ensure balanced service bearing of each streaming media instance and guarantee service transmission efficiency. In actual implementation, the specific method of service distribution is not limited and can be adjusted according to actual conditions, such as reserving idle streaming media instances to cope with sudden service volume demands.

Through the above operations, a data stream scheduling method of an audio and video network is provided. By constructing tree-like paths between edge nodes based on network topology data of the audio and video network, decoupling the tree-like paths to corresponding edge nodes according to source nodes, and scheduling, by each edge node among the edge nodes, a data stream according to the tree-like path corresponding to the edge node, the problems of high mesh distribution cost and heavy management and scheduling pressure on the control side in related technologies are solved, achieving the effects of reducing the data stream scheduling cost of the audio and video network and alleviating the management and scheduling pressure on the control side.

Through the description of the foregoing implementations, those having ordinary skill in the art can clearly understand that the data stream scheduling method of the audio and video network according to the foregoing embodiments may be implemented by means of software plus a necessary general-purpose hardware platform, and certainly may also be implemented by hardware, but the former is a better implementation manner in many cases. Based on such understanding, the technical solutions of the present disclosure essentially, or the parts contributing to the related art, may be embodied in the form of a software product. The computer software product is stored in a readable storage medium (such as ROM/RAM, magnetic disk, optical disk), and includes a number of instructions for enabling a terminal device (which may be a mobile phone, a computer, a server, a network device, or the like) to execute the data stream scheduling method of the audio and video network of the embodiments of the present disclosure.

In this embodiment, a data stream scheduling apparatus of an audio and video network is also provided. The data stream scheduling apparatus is configured to implement the foregoing embodiments and exemplary implementations, and descriptions of those already provided are not repeated below. As used hereinafter, the term "module" may refer to a combination of software and/or hardware capable of realizing a predetermined function. Although the data stream scheduling apparatus described in the following embodiments is preferably implemented by software, implementation by hardware, or a combination of software and hardware, is also possible and contemplated.

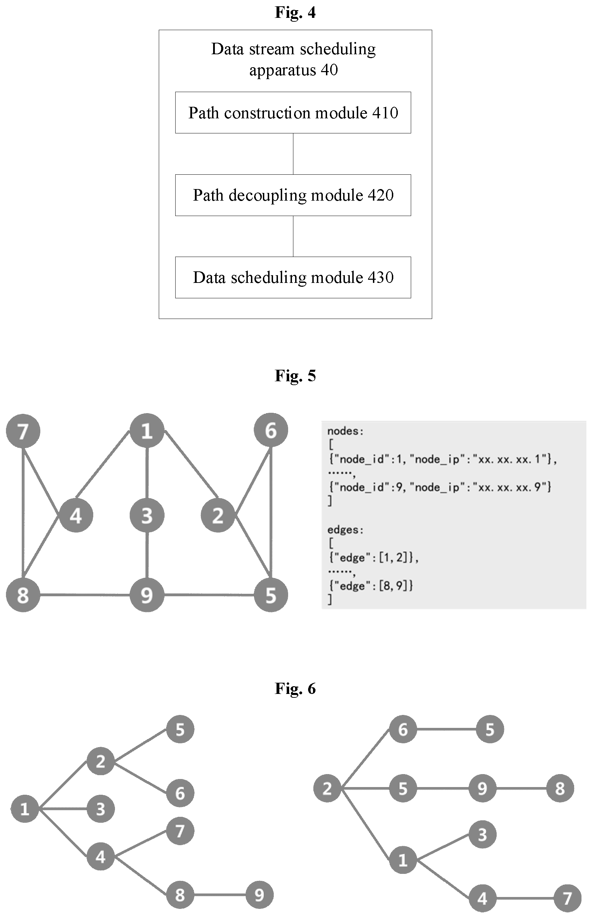

Fig. 4 is a structural block diagram of a data stream scheduling apparatus of an audio and video network according to one or more embodiments of the present disclosure. As shown in Fig. 4, the data stream scheduling apparatus 40 includes: a path construction module 410, configured to construct tree-like paths between edge nodes based on network topology data of the audio and video network; a path decoupling module 420, configured to decouple each tree-like path among the tree-like paths to the edge node corresponding to the tree-like path according to a source node of the tree-like path; and a data scheduling module 430, configured to schedule a data stream according to the tree-like path corresponding to the edge node.

It should be noted that each of the above modules may be implemented by software or hardware. For the latter, implementation may be achieved, but is not limited to, in the following manner: the modules are all located in the same processor; or, the modules are located in different processors in any combination.

The embodiments of the present disclosure also provide a computer-readable storage medium. A computer program is stored in the computer-readable storage medium, wherein the computer program is configured to execute, when running, the operations in any one of the method embodiments described above.

In an exemplary embodiment, the computer-readable storage medium may include, but is not limited to: a Universal Serial Bus (USB) flash drive, a Read-Only Memory (ROM), a Random Access Memory (RAM), a mobile hard disk, a magnetic disk, an optical disc, or any other medium capable of storing a computer program.

The embodiments of the present disclosure also provide an electronic device, including a memory and a processor. A computer program is stored in the memory, and the processor is configured to run the computer program to execute the operations in any one of the method embodiments described above.

In an exemplary embodiment, the electronic device may further include a transmission device and an input/output device, wherein the transmission device is connected to the processor, and the input/output device is connected to the processor.

The specific examples in this embodiment may refer to the examples described in the above embodiments and exemplary implementations, and are not repeated herein.

Obviously, those having ordinary skill in the art will appreciate that the modules or operations of the embodiments of the present disclosure described above can be implemented by a general-purpose computing device. They may be centralized on a single computing device or distributed over a network consisting of multiple computing devices. They may be implemented by program code executable by a computing device, and thus may be stored in a storage device and executed by the computing device. Moreover, in some cases, the operations shown or described may be performed in an order different from that described herein, or they may be fabricated into separate integrated circuit modules, or multiple modules or operations may be fabricated into a single integrated circuit module. Thus, the embodiments of the present disclosure are not limited to any specific combination of hardware and software.

To enable those having ordinary skill in the art to better understand the technical solutions of the embodiments of the present disclosure, the following description is made in conjunction with specific scenario-based embodiments.

### Embodiment 1

In this scenario-based embodiment, the specific operations of the data stream scheduling method of the audio and video network provided by the embodiments of the present disclosure are elaborated in combination with the network architecture shown in Fig. 2.

### Operation 1. Data Management and Synchronization

When RTN system initialization, node change, network topology change, or other such situations occur, the following operations need to be performed: First, node and network topology information is configured in the network awareness module of the control center; then the configured data is synchronized to the path planning module of the control center and the respective edge proxy modules of the respective edge nodes.

### 1.1. Configure Node and Network Topology

According to the actual deployment of RTN nodes, information such as the IP addresses and Uniform Resource Locator (URL) of each RTN node is configured on the node page of the network awareness (module) in the control center. After the above information is configured, the network awareness (module) automatically generates a node ID for each node. According to the actual network connections of the RTN, the connection edge information of each RTN node is configured on the network topology page of the network awareness (module) to generate a network topology diagram. After the above information is configured, the network awareness (module) automatically generates a network topology table.

Fig. 5 is a schematic diagram of network topology and data according to one or more embodiments of the present disclosure. Fig. 5 shows the network topology diagram and generated data configured by the network awareness (module) according to the actual deployment of the RTN system.

### 1.2. Synchronize Network Topology and Node Mapping Information

The network awareness (module) synchronizes the network topology data to the path planning module in real time, and synchronizes the mapping data of the IP addresses and IDs of the nodes to the edge proxy modules of respective edge nodes in real time.

### 1.3. Synchronize Network Detection Data

The network awareness (module) initiates data detection requests to the network detection modules of respective edge nodes according to the real-time network topology, drives each edge node to perform network detection with adjacent nodes, collects data such as network packet loss rate, delay, and bandwidth between nodes, and immediately synchronizes these data to the path planning (module). The network detection cycle can be set to second-level detection to perceive network changes in real time.

### Operation 2. Dynamically Plan Node-Level Tree-Like Paths

The path planning (module) first constructs a network topology diagram based on the network topology data synchronized by the network awareness (module); then quantifies the network topology based on the network detection data; and finally calculates the tree-like paths with respective node as the source node to reach other nodes. Each time the path planning (module) receives updated detection data synchronized by the network awareness (module), the path planning (module) performs a new round of calculation and planning in real time, dynamically generating node-level tree-like paths.

Fig. 6 is a schematic diagram of an example of dynamically planned node-level tree-like paths according to one or more embodiments of the present disclosure. Fig. 6 shows the tree-like paths generated in real-time planning based on the network topology in operation 1.

### Operation 3. Decouple Paths According to Source Nodes

After dynamically planning the tree-like paths with respective node as the source node to reach other nodes, the path planning (module) decouples the tree-like paths in real time according to the source nodes, synchronizes and sinks the tree-like paths to the edge proxy modules of respective edge nodes identical to the root nodes of the respective tree-like paths, thereby completing the decoupling of tree-like path data from the center to the edge nodes. The tree-like paths in the decoupling stage according to source nodes can be represented in the form of a nested array: elements of the outer array of the nested array represent one piece of path information, and the whole outer array represents all path information from the source node to other nodes; elements of the inner array of the nested array represent one node information, and the whole inner array represents one piece of path information according to the sequential order of elements.

For example, according to the tree-like paths planned in operation 2, if the path planning (module) represents the tree-like paths in the form of a nested array, the path information synchronized and sunk to the edge proxy (module) of edge node 1 according to source node 1 is:
[ [1,2],[1,3],[1,4],[1,2,5],[1,2,6],[1,4,7],[1,4,8],[1,4,8,9] ]

The path information synchronized and sunk to the edge proxy (module) of edge node 2 according to source node 2 is:
[ [2,1],[2,1,3],[2,1,4],[2,5],[2,6],[2,1,4,7],[2,5,9,8],[2,5,9] ]

### Operation 4. Maintain Edge Paths

The edge proxy (module) stores and maintains the tree-like path data. Considering that CDN and large-scale low-latency live streaming scenarios require distributing data to multiple different target nodes, and also considering that original RTN scenarios require transmitting data to one target node, that is, it is necessary to both query tree-like paths for multiple target nodes and a single path for a single target node, single paths can be stored and maintained. Moreover, since the source node of the tree-like path is the local node, different paths can be distinguished by target nodes. Therefore, the tree-like path in the stage where the edge proxy (module) maintains the tree-like path can be represented in the form of a target node mapping table: each path is stored using a "map", where the "key" represents the target node, and the "value" represents the complete path from the source node to that target node. The representation form of the path is the same as the inner array in operation 3.

For example, according to the tree-like path information synchronized and sunk in operation 3, if the edge proxy (module) of edge node 1 represents the tree-like path information in the form of a target node mapping table, the stored and maintained path information is:
<2,[1,2]>, <3,[1,3]>, <4,[1,4]>, <5,[1,2,5]>, <6,[1,2,6]>, <7,[1,4,7]>, <8,[1,4,8]>, <9,[1,4,8,9]>

### Operation 5. Acquire Tree-Like Paths

When service data needs to be transmitted through the RTN system, i.e., when the streaming media instance of the source node receives a transmission request from the streaming media instance of a target node, the streaming media instance of the source node first judges how to acquire the path based on the target node and the instances. The rules are as follows:
1) Same instance: It is not necessary to acquire a node-level path; the streaming media instance itself completes the transmission.
2) Different instances within the same node: It is not necessary to acquire a node-level path; streaming media instances within the node cascade to complete the transmission.
3) Different nodes: It is necessary to acquire a node-level path; the streaming media instance of the source node carries the source node ID and the target node ID to the edge proxy of the local node to acquire the path.

Further, in the case of different nodes, it may be determined, according to whether the scenario is CDN or large-scale low-latency live streaming, whether a single target node or multiple target nodes are acquiring the data stream from the same source node. The determination rules are as follows:
Single target node: The edge proxy directly returns a single piece of path information, and the representation form of the path is the same as the inner array in operation 3.

Multiple target nodes: The edge proxy combines multiple pieces of path information into a tree-like path and returns the tree-like path. The tree-like path in the stage of acquiring the tree-like path can be represented in the form of a branch nested array: elements of the outer array of the branch nested array represent a branch, and the whole outer array represents all branches of the tree-like path; elements of the inner array of the branch nested array represent a node, and the whole inner array indicates that the node represented by the first element will distribute data to the nodes represented by the subsequent elements, i.e., a branch.

For example, according to the path information maintained by the edge proxy in edge node 1 in operation 4, when the RTN system needs to transmit service data from source node 1 to target node 5, the streaming media instance of the source node queries the edge proxy of the local node (i.e., the source node), and acquires the following path information: [1,2,5]. When the RTN system needs to transmit service data to target nodes 2, 3, 4, 5, 6, 7, 8 and 9, the streaming media instance of the source node queries the edge proxy of the local node (i.e., the source node), and acquires the following path information: [ [1,2,3,4],[2,5,6],[4,7,8],[8,9] ]. This branch nested array indicates that when the data stream reaches node 1, node 1 needs to replicate the data into 2 copies and distribute the 3 copies of the data to nodes 2, 3, 4; when the data stream reaches node 2, node 2 needs to replicate the data into 2 copies and distribute the 2 copies of the data to nodes 5, 6; and so on.

### Operation 6. Encapsulate Tree-Like Path Information

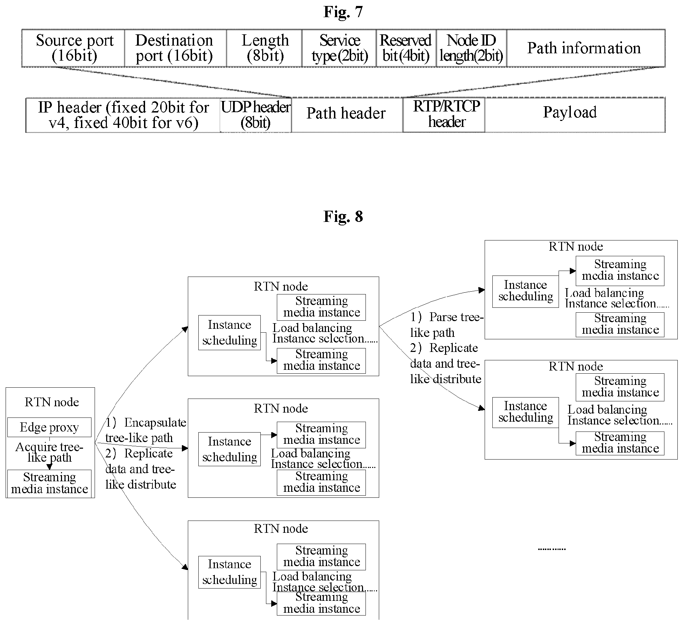

After the streaming media instance of the source node acquires the tree-like path, the source node needs to encapsulate the tree-like path information in a path header of a protocol stack of a media packet. The format and fields of the path header may be defined. Fig. 7 is a schematic diagram of a path protocol according to one or more embodiments of the present disclosure. As shown in Fig. 7, the path protocol may include the following fields. Source and Destination Ports: The source port is a sending port of the local node, and the destination port is a receiving port of the target node. The destination port for intermediate nodes is a fixed value. Length: The length of the path header. Service Type: Used to identify whether it is a single target node or multiple target nodes, thereby adopting different methods for parsing the path information. Node ID Length: 00 indicates 1 byte, 01 indicates 2 bytes. Path Information: This field is filled according to the path representation form in operation 5, where in the case of a tree-like path, a "0" identifier is used to distinguish different branches. For example, the tree-like path in operation 5 may be represented in the path protocol as: 123402560478089.

### Operation 7. Load-Balanced Tree-Like Distribution

In the embodiment of the present disclosure, when distributing service data to streaming media instances, a load-balancing method can be adopted for service distribution by combining actual service conditions and streaming media instance conditions, so that the service loads of respective streaming media instances are balanced, ensuring service transmission efficiency. In actual implementation, the specific method of service distribution is not limited and can be adjusted according to actual conditions, such as reserving idle streaming media instances to cope with sudden service volume demands.

Fig. 8 is a schematic diagram of a principle of load-balanced tree-like distribution according to one or more embodiments of the present disclosure. As shown in Fig. 8, in the embodiments of the present disclosure, service data is distributed in a tree-like manner using a load-balancing method, including the following operations:
Operation 7.1. A streaming media instance of a source node, according to the path protocol agreed in operation 6, parses the path header to acquire an ID list and port information of the next-hop nodes.

Operation 7.2. The streaming media instance of the source node initiates to the edge proxy of the local node a query carrying each node ID, and maps each next-hop node ID to the IP address of each node.

Operation 7.3. The streaming media instance of the source node first replicates the data packet in the local node, with a replication quantity being the number of next-hop nodes to be transmitted; then, according to the IP addresses and ports of all next-hop nodes, transmits the replicated data packets to all next-hop edge nodes, completing the distribution of that branch of the tree-like path.

Operation 7.4. The instance scheduling module of an intermediate node receives the service data stream, and through a load-balancing mechanism, selects an available streaming media instance within the node and performs data transmission.

Operation 7.5. The streaming media instance of the intermediate node receives the service data stream, parses the path header of the media packet, acquires the path information, retrieves the "0" identifier, and then finds the first path node after the "0" identifier. The streaming media instance of the intermediate node determines whether this path node is the intermediate node itself; if yes, performs branch distribution, and continues to perform the above operations 7.1 to 7.4; if not, continues to traverse the path information until the last "0" identifier and the next path node of the last "0" identifier. If the traversal ends and the intermediate node itself is not found, the intermediate node determines that the intermediate node is the target node and ends the distribution.

For example, according to the path information acquired in operation 6, source node 1 parses the path header and acquires that the next-hop nodes are nodes 2, 3 and 4. In the source node, the data packet is replicated into 3 copies and transmitted to nodes 2, 3 and 4 respectively; node 2 parses the path header and acquires that the next-hop nodes are nodes 5 and 6. In the local node, the data packet is replicated into 2 copies and transmitted to nodes 5 and 6 respectively; node 3 parses the path header and finds that the local node has no next hop, so distribution ends; node 4 parses the path header and acquires that the next-hop nodes are nodes 7 and 8. In the local node, the data packet is replicated into 2 copies and transmitted to nodes 7 and 8 respectively; and so on.

In summary, the embodiments of the present disclosure provide a data stream scheduling method for an audio and video network, solving a series of problems in integrating CDN capabilities and large-scale low-latency live streaming capabilities into the RTN system. Through dynamic tree-like planning and distribution: first, the control side dynamically plans tree-like paths; then, represents the tree-like paths in the form of nested arrays and delivers the tree-like paths to each edge node; then, represents the tree-like paths in the form of a target node mapping table for storage; then, represents the tree-like paths in the form of branch nested arrays and encapsulates the branch nested arrays into a customized tree-like path protocol header; finally, when a streaming media instance parses the path header and acquires a tree-like path branch, the streaming media instance replicates the data on this streaming media instance and distributes the data stream to different next-hop nodes. This method leverages the management of tree-like path information and the reuse of edge nodes, avoiding the problems of high pressure and high cost of full-link mesh distribution, and can support scenarios such as CDN, large-scale low-latency live streaming, and single-sender-multiple-receivers. Through center node-level scheduling and edge instance-level scheduling distribution: first, the control side collects node-level data and plans node-level tree-like paths; then, decouples paths according to source nodes, sinking node-level paths to each edge node; then, the streaming media instance acquires the path by querying the local node; then, the streaming media instance maps the node ID of the next hop in the path to the node IP address by querying the local node, and transmits the data packet to the next-hop node; finally, the next-hop node selects a streaming media instance for distribution through load balancing within the node. This method uses the principle of hierarchical management to reduce system complexity, reduce signaling interaction between the control side and the transmission side, alleviate the instance-level scheduling pressure on the control side, and also alleviate the pressure on edge nodes in the transmission side to acquire paths from the control side.

The data stream scheduling method of the audio and video network provided by the embodiments of the present disclosure is applicable to real-time audio and video related industries, such as CDN live streaming, cloud computing, video conferencing, video Internet of Things (IoT), interactive live streaming, Extended Reality (XR), etc. The data stream scheduling method of the audio and video network provided by the embodiments of the present disclosure is also applicable to services that require accelerated data transmission, including acceleration transmission of audio, video, text, images, and other media and non-media data.

The foregoing descriptions are merely exemplary embodiments of the present disclosure and are not intended to limit the present disclosure. For those having ordinary skill in the art, the present disclosure may have various modifications and variations. Any modifications, equivalent replacements, improvements, and the like made within the principles of the present disclosure shall fall within the protection scope of the present disclosure.

## Claims

1. A data stream scheduling method of an audio and video network, comprising:
constructing tree-like paths between edge nodes based on network topology data of the audio and video network;
decoupling each tree-like path among the tree-like paths to the edge node corresponding to the tree-like path according to a source node of the tree-like path; and
scheduling, by each edge node among the edge nodes, a data stream according to the tree-like path corresponding to the edge node.

2. The data stream scheduling method of the audio and video network according to claim 1, wherein constructing the tree-like paths between the edge nodes based on the network topology data of the audio and video network comprises:
acquiring the network topology data of the audio and video network, and quantifying the network topology data according to network detection data of each edge node; and
constructing the tree-like paths between the edge nodes based on the quantified network topology data.

3. The data stream scheduling method of the audio and video network according to claim 2, wherein the network detection data comprises at least one of:
a network packet loss rate of each edge node;
delay data of each edge node; or
bandwidth data of each edge node.

4. The data stream scheduling method of the audio and video network according to claim 1, wherein decoupling each tree-like path among the tree-like paths to the edge node corresponding to the tree-like path according to the source node of the tree-like path comprises:
decoupling each tree-like path among the tree-like paths to the edge node identical to a root node of the tree-like path in a nested array format.

5. The data stream scheduling method of the audio and video network according to claim 1, wherein after decoupling each tree-like path among the tree-like paths to the edge node corresponding to the tree-like path according to the source node of the tree-like path, the data stream scheduling method of the audio and video network further comprises:
storing and maintaining, by each edge node, the tree-like path corresponding to the edge node.

6. The data stream scheduling method of the audio and video network according to claim 5, wherein storing and maintaining, by each edge node, the tree-like path corresponding to the edge node comprises:
storing and maintaining, by each edge node, the tree-like path corresponding to the edge node via a target node mapping table.

7. The data stream scheduling method of the audio and video network according to claim 1, wherein scheduling, by each edge node among the edge nodes, the data stream according to the tree-like path corresponding to the edge node comprises:
in response to a transmission request from one or more target nodes, acquiring, by a source node among the edge nodes, a corresponding tree-like path, and scheduling, by the source node, the data stream according to the tree-like path.

8. The data stream scheduling method of the audio and video network according to claim 7, wherein in response to the transmission request from the one or more target nodes, acquiring, by the source node among the edge nodes, the corresponding tree-like path comprises:
in a case where the transmission request originates from one or more edge nodes different from the source node, acquiring, by a streaming media instance of the source node, the corresponding tree-like path according to an Identifier (ID) of the source node and an ID of each of the one or more target nodes.

9. The data stream scheduling method of the audio and video network according to claim 8, wherein acquiring, by the streaming media instance of the source node, the corresponding tree-like path according to the ID of the source node and the ID of each of the one or more target nodes comprises:
in a case where a quantity of the one or more target nodes is equal to 1, acquiring, by the source node, one piece of path information;
in a case where the quantity of the one or more target nodes is greater than 1, acquiring, by the source node, multiple pieces of path information, combining, by the source node, the multiple pieces of path information into the tree-like path, and transmitting, by the source node, the tree-like path to each edge node in the multiple pieces of path information in a branch nested array format.

10. The data stream scheduling method of the audio and video network according to claim 7, wherein after acquiring, by the source node among the edge nodes, the corresponding tree-like path in response to the transmission request from the one or more target nodes, the data stream scheduling method of the audio and video network further comprises:
encapsulating, by the source node, the tree-like path in a path header of a media packet protocol stack.

11. The data stream scheduling method of the audio and video network according to claim 10, wherein scheduling, by the source node, the data stream according to the tree-like path comprises:
parsing, by the source node, the path header to acquire path information containing an Internet Protocol (IP) address of each of one or more next-hop nodes;
replicating, by the source node, a data packet to be transmitted based on a quantity of the one or more next-hop nodes so as to obtain one or more replicated data packets, and transmitting, by the source node, the one or more replicated data packets to the one or more next-hop nodes;
determining, by each next-hop node among the one or more next-hop nodes, whether the next-hop node is a target node, in a case where the next-hop node is a target node, terminating scheduling of the data stream, and in a case where the next-hop node is not a target node, continuing scheduling the data stream according to the path information parsed from the path header.

12. A computer-readable storage medium, storing a computer program, wherein the computer program, when executed by a processor, causes the processor to implement the data stream scheduling method of the audio and video network according to any one of claims 1 to 11.

13. An electronic device, comprising a memory, a processor, and a computer program stored on the memory and executable on the processor, wherein the processor, when executing the computer program, implements the data stream scheduling method of the audio and video network according to any one of claims 1 to 11.
